# EUROPEAN PATENT APPLICATION

(11) **EP 2 017 139 A1**
(43) Date of publication of application: **21.01.2009**
(21) Application number: 07112626.2
(22) Date of filing: 17.07.2007
(51) Int. Cl.: B60R 21/015

(54) **Occupant detection system for an automotive vehicle**

(71) Applicant: IEE International Electronics & Engineering S.A.R.L., 2632 Luxembourg (LU)
(72) Inventor: Orlewski, Pierre, 9021, ETTELBRUCK (LU)
(74) Representative: Beissel, Jean

(57) **Abstract**

An automotive vehicle includes an occupant detection system (10) for detecting an occupancy state of one or more passenger seats. The occupant detection system (10) comprises a control unit (20), one or more vibration sensors (18) operatively connected to the control unit (20), each one of the one or more vibration sensors (18) being arranged in a respective one of the passenger seats, and at least one vibration sensor (18) that is arranged in the driver seat and operatively connected to the control unit (20) so as to provide a reference signal to the control unit (20).

## Description

### Technical field

The present invention generally relates to an occupant detection system for an automotive vehicle, in particular such a system comprising vibration sensors arranged in vehicle seats, e.g. for sensing an occupant's heartbeat and/or breathing rate.

### Background Art

Vibration sensors are well known for detecting presence or absence of a vehicle seat occupant. For instance, US 2005/0027416 A1 discloses a heartbeat sensing system in a vehicle. A first acceleration or vibration sensor is placed in a vehicle seat and a second such sensor is placed on the vehicle floor. When the seat is occupied, the first sensor receives vibrations caused by the occupant's heartbeat. However, since vibrations originating from the environment are received as well, the heartbeat signal may be obscured by that noise. The second sensor, located remote from the occupant, receives vibrations from the environment, resulting e.g. from the vehicle running, but not from the occupant and thus provides a reference signal that is used to extract the heartbeat signal from the noisy signal delivered by the first sensor.

Electret sensors are known to be suitable for converting mechanical forces produced by movements and vital functions of a person into electrical signals. An electret film (sometimes also called "ferroelectret") is a dielectric film containing gas bubbles or blisters, with a permanent or quasi-permanent electric charge distribution therein, which causes the dielectric material to be polarised. The dielectric film is sandwiched between two layers of conductive material forming electrodes that are connectable to an evaluation circuit. The assembly of the electret film and the two sandwiching conductive layers is referred to herein as "electret sensor" or "electret vibration sensor". Such electret sensors are disclosed, for instance, in European patent application 0 182 764 and US patent 7,216,417.

### Technical problem

It is an object of the present invention to provide a vehicle with an improved occupant detection system. This object is achieved in the automotive vehicle as claimed in claim 1.

### General Description of the Invention

An automotive vehicle includes an occupant detection system for detecting an occupancy state of one or more passenger seats. The occupant detection system comprises a control unit and one or more vibration sensors operatively connected to the control unit, each one of the one or more vibration sensors being arranged in a respective one of the passenger seats. According to an important aspect of the invention, the occupant detection system comprises at least one vibration sensor that is arranged in the driver seat and operatively connected to the control unit so as to provide a reference signal to the control unit.

The present invention uses the fact that in a running vehicle the driver seat is always occupied by an adult person (apart from very exceptional circumstances). As will be appreciated, the control unit can, for instance, use the reference signal obtained from the vibration sensor in the driver seat to derive the environmental noise. To achieve this, the control unit may apply a pattern recognition algorithm, which recognises those vibrations that are typical for the presence of a driver (e.g. driver heartbeat and/or breathing rate). These vibrations may then be filtered from the raw reference signal so as to obtain a background noise signal, which basically contains only those vibrations that are due to the running of the vehicle. Alternatively, the control unit may also compare the reference signal with the signal(s) of the vibration sensor(s) in the passenger seat(s). If the reference signal and another signal are "similar" in at least one predefined aspect, the control unit would conclude that the corresponding passenger seat is occupied. If the reference signal differs from the other signal in the at least one predefined aspect, the conclusion would be that the corresponding passenger seat is empty. Those skilled will appreciate that to determine similarity or dissimilarity of the signals, the control unit could map the signals (received from the vibration sensors in the driver seat and the passenger seats) onto points in a feature space and decide on the degree of similarity or dissimilarity based upon a distance between these points in the feature space. This and similar techniques (e.g. using neural networks) are known per se and need no in-depth discussion in the framework of the present disclosure.

Preferably, each one of the vibration sensors is a heartbeat and/or breathing sensor, i.e. is sufficiently sensitive for sensing heart beat and/or breathing rate of an occupant (e.g. an adult, a child or an infant in his infant seat) when the occupant is seated on the respective seat. The reference signal contains, in this case, a noise signal component and, if the driver seat is occupied by the driver, a heartbeat and/or breathing signal component. The control unit could separate the noise component from the heartbeat/breathing rate component e.g. by searching for patterns caused by the driver's heartbeat and/or breathing in the frequency ranges from 0.5 to 3.0 Hz (30 to 180 beats per minute) for the heartbeat and from 0.1 to 0.8 Hz for the breathing. To separate the heartbeat and breathing components from the underlying background noise, the control unit could use various techniques. For instance, it might use pattern matching, cluster analysis, principal components analysis, logistic regression or multivariate regressions, etc., based upon comparison with previously stored signal patterns recorded in various situations (different vehicle noise levels, different heartbeat and/or breathing amplitudes, different occupancy states: adult person, child, infant in infant seat, pet, heavy object on seat, and the like). Another approach may comprise using adaptive filters based on wavelets. The advantage of such an approach is only the parameters of the wavelets are stored, which considerably reduces the amount of data to be stored.

Those skilled will appreciate that the separation of the noise signal component on the one hand and the heartbeat and breathing components on the other hand is easier to achieve for the signal from the vibration sensor in the driver seat than for the other signals, because the occupancy state of the driver seat in a running vehicle can be assumed to be known.

According to a preferred embodiment of the invention, the vibration sensors in the vehicle seats comprise electret vibration sensors, e.g. polymer ferroelectrets, or polymer-based electromechanical films. Such vibration sensors are suitable for detecting heartbeat and/or breath rate. The dielectric film of such an electret sensor can be made of various polymers, including, for instance, polypropylene (PP), isostatic polypropylene (i-PP), poly(tetrafluoroethylene) (PTFE), various copolymers of PTFE (such as e.g. AF, TFE, FEP, PFA), cyclo-olefins (COC), cyclo-olefin copolymers, polyethylene (PE), polyetherimide (PEI), polyetherketone (PEEK), polyvinylidene difluoride (PVDF) or copolymers thereof (like P(VDF-TrFE)), polyethylene terephthalate (PET), polyethylene naphthalate (PEN) and polyimide (PI). The electret vibration sensor preferably is chosen such that its piezoelectric charge constant amounts to at least 50 pC/N, more preferably such that its piezoelectric charge constant is comprised in the range from 75 pC/N to 150 pC/N.

In a preferred variant of the invention, the passenger seats (and possibly also the driver seat) are equipped with additional occupant sensors of a different type. These additional occupant sensors may comprise, for instance, one or more capacitive sensors connected to the control unit and each arranged in a respective one of the one or more passenger seats. More preferably, the additional occupant sensors comprise one or more pressure sensors connected to the control unit and each arranged in a respective one of the one or more passenger seats. Advantageously, these pressure sensors are film-type pressure sensors. The combination of additional occupant sensors with the vibration sensors provides for increased detection reliability. Additionally, such a system may classify an object or occupant into a broader variety of classes. Moreover, since the additional occupant sensors offer another possibility for detecting an empty seat, the control unit may use the signal of the vibration sensor(s) in this seat as an empty seat reference signal containing only background vibrations. This may simplify the detection of vibrations caused by the passengers or the driver in the occupied seats and the attribution of occupant classes.

Most preferably, any additional occupant sensors and the vibration sensors form constructional entities in the respective passenger seats or driver seat. For example, a film-type capacitive sensor or a film-type pressure sensor could be arranged together with a vibration sensor in a flexible sandwich structure.

The vibration sensors may be arranged anywhere in the vehicle seats, e.g. in the backrest. Preferably, however, they are arranged in the seating portions of the vehicle seats.

According to a preferred embodiment of the invention, the occupant detection system is operatively connected with or is part of a safety system configured and arranged for monitoring the vehicle interior when the automotive vehicle is at rest. The safety system may comprise further sensors, e.g. door lock sensors, an outside and/or an inside thermometer, ultrasonic sensors, a 2D and/or a 3D camera arranged inside the vehicle compartment, a 2D and/or a 3D camera arranged on the outside of the vehicle, a crash sensor, etc. The safety system may be configured as an anti-theft system or for detecting human presence in the vehicle when it is not moving. More specifically, the safety system may be configured for detecting, while operational, the presence of a child or infant in the vehicle and certain environmental conditions, such as temperature, in order to issue a warning in case a risk for child hyper- or hypothermia should approaches a level deemed dangerous. The safety system preferably comprises a warning device in the vehicle for warning passers-by and/or is configured and arranged for wirelessly communicating with a warning device in the driver's car key. Additionally or alternatively, the safety system could also be configured so as to be able to contact the driver (or any other predefined person) on his/her pager or cellular phone. Those skilled will appreciate that the safety system of this embodiment of the invention may detect certain vital functions, such as heartbeat and breathing of a child or infant left unattended in the vehicle if the vibration sensors are configured as heartbeat and/or breathing sensors. The system might use these vital functions to assess the gravity of the situation. If equipped with appropriate means of communication, the system could despatch an emergency call to an emergency call centre in case of imminent danger for the child or infant.

Preferably, the safety system includes or is operatively connected with the occupant detection system, a warning device and a power management module, which puts the whole system into a power saving mode if the situation is uncritical (in particular if all vehicle seats are empty). In such power saving mode, the detection cycles of the system could be more spaced in time.

The present invention can also advantageously be used in a vehicle having one or more of the passenger seats (e.g. the seats in the rear of the vehicle) equipped with automatically deployable and retractable headrests. In this case, the control unit may control retraction and deployment of the headrests depending on the occupancy states of the one or more passenger seats. Those skilled will appreciate that the headrests of the rear seats of a vehicle are preferably in retracted position when these seats are empty since they partially obscure the driver's rear view. If one of these seats is occupied, however, the headrest should be in the deployed position so as to protect the occupant in the event of a crash. In the present embodiment, the occupant detection system ascertains that the headrests are brought into the appropriate position depending on whether the respective seats are occupied or not. If the vibration sensors are configured for detecting heartbeat and/or breathing rate, the system may be configured so as to maintain a headrest in the retracted position unless a person is detected on the respective seat.

Those skilled will appreciate that the occupant detection system could comprise an additional vibration or acceleration sensor arranged in a location of the vehicle remote from the vehicle seat, so as to provide a further reference signal. Preferably, however, the system does not comprise such an additional vibration or acceleration sensor remote from the seats.

### Brief Description of the Drawings

Further details and advantages of the present invention will be apparent from the following detailed description of several not limiting embodiments with reference to the attached drawings, wherein:
Fig. 1 is a schematic view of an occupant detection system having electret vibration sensor integrated into the seating portions of a driver seat and a plurality of passenger seats;
Fig. 2 is a schematic view of an occupant detection system having electret vibration sensors and pressure sensors integrated into the seating portions of a driver seat and a plurality of passenger seats;
Fig.3 is a cross sectional schematic view of an electret vibration sensor combined with a pressure sensor according to a first variant;
Fig. 4 is a cross sectional schematic view of an electret vibration sensor combined with a pressure sensor according to a second variant
Fig. 5 is a cross sectional schematic view of an electret vibration sensor combined with a capacitive sensor;
Fig. 6 is a schematic diagram illustrating a method for detecting seat occupation based on cluster analysis.

### Description of Preferred Embodiments

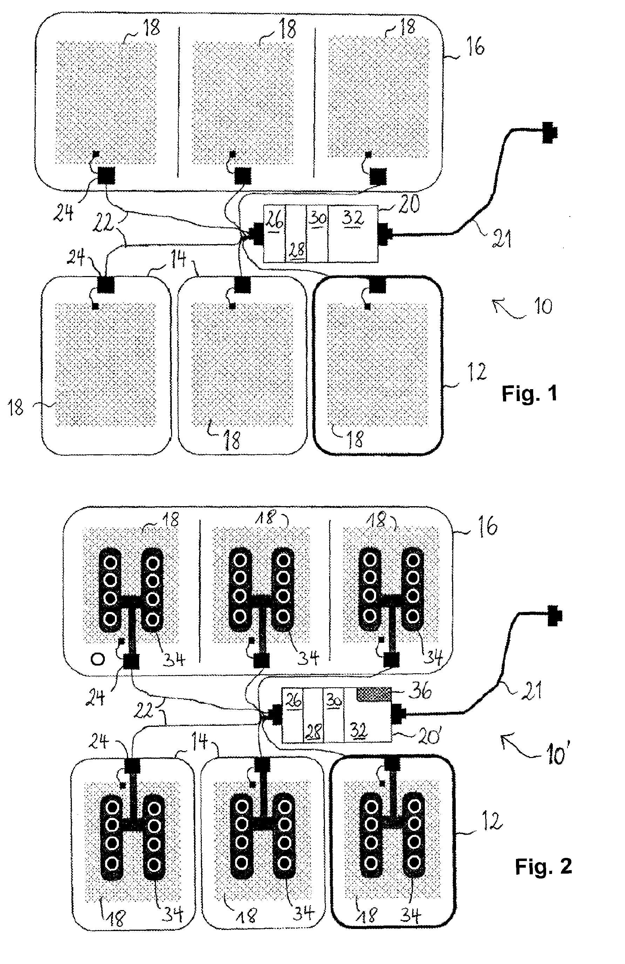

Fig. 1 illustrates an occupant detection system 10 for a vehicle having a plurality of vehicle seats disposed therein. The vehicle seats include a driver seat 12, individual passenger seats 14 and a bench 16 representing three passenger seats. It shall be noted that the shown disposition of the seats as well as their number may be different from an actual disposition within a vehicle. Each vehicle seat 12, 14, 16 has a seating section, in which is fitted an electret vibration sensor 18. The electret vibration sensors 18 are connected to an electronic control unit 20, via wires 22 and connection sockets 24.

The electronic control unit 20 comprises amplifiers 26 and filters 28 for amplifying and filtering the signals from the electret vibration sensors 18, respectively. The amplified and filtered signals are multiplexed at multiplexer 30, which interfaces the amplifiers and filters with a processing unit 32 (e.g. an application-specific integrated circuit (ASIC), a field-programmable gate array (FPGA), or the like), which implements the algorithm detecting and possibly classifying occupants of the vehicle seats. The control unit 20 is connectable to an on-board vehicle computer (not shown) by means of interface cable 21.

When operating, the system 10 uses the signal from the driver seat 12 as a reference. The processing unit 32 runs a pattern recognition algorithm, which recognises signal components of the amplified and filtered reference signal that are due to vibrations typical for the presence of a driver, in particular the driver's heartbeat and breathing. The processing unit then strips these signal components off the amplified and filtered reference so as to obtain a noise signal component, which basically contains only those vibrations that are due to the running of the vehicle (background noise). The driver's heartbeat and breathing signal component may be further processed for determining whether the driver is in healthy condition to drive. The noise signal component of the reference signal is used for retrieving the heartbeat and breathing signal components of the signals obtained from the other vibration sensors. If one or more of the signals coming from the vibration sensors in the passenger seats contain no heartbeat and breathing signal component, the processing unit may take these signals into account for determining the noise due to the vehicle vibrations common to all vibration sensors.

Fig. 2 illustrates an occupant detection system 10', in which electret vibration sensors 18 and film-type pressure sensors 34 form constructional units, which are integrated into the seating portions of the vehicle seats 12, 14, 16. The electret vibration sensors 18 and the film-type pressure sensors 34 are connected to the control unit 20' via wires 22 and connection sockets 24. The control unit 20' comprises essentially the components of the control unit 20 of Fig. 1; however, control unit 20' has an increased number of channels and a modified processing unit 32 for driving and interrogating the pressure sensors 34. The control unit 20' further includes an (optional) additional acceleration sensor 36, arranged remote from the vehicle seats 12, 14, 16 for directly detecting the noise caused by the running vehicle.

The system 10' may operate differently from the system 10, in particular because the pressure sensors provide additional indications on which seats are occupied and which are vacant. If one or more of the pressure sensors 34 detects that its associated seat is empty (no load applied), the signal from the corresponding electret vibration sensor may be taken as a reference signal containing only the vibrations caused by the running vehicle. If the pressure sensor determines all seats as being occupied (either by an occupant or a load applied on the seating surface), the processing unit 32 uses the signal from the vibration sensor in the driver seat as a reference signal. The classification of occupancy states of the different vehicle seats is achieved based on the inputs from the pressure sensors 34 and the electret vibration sensors 18.

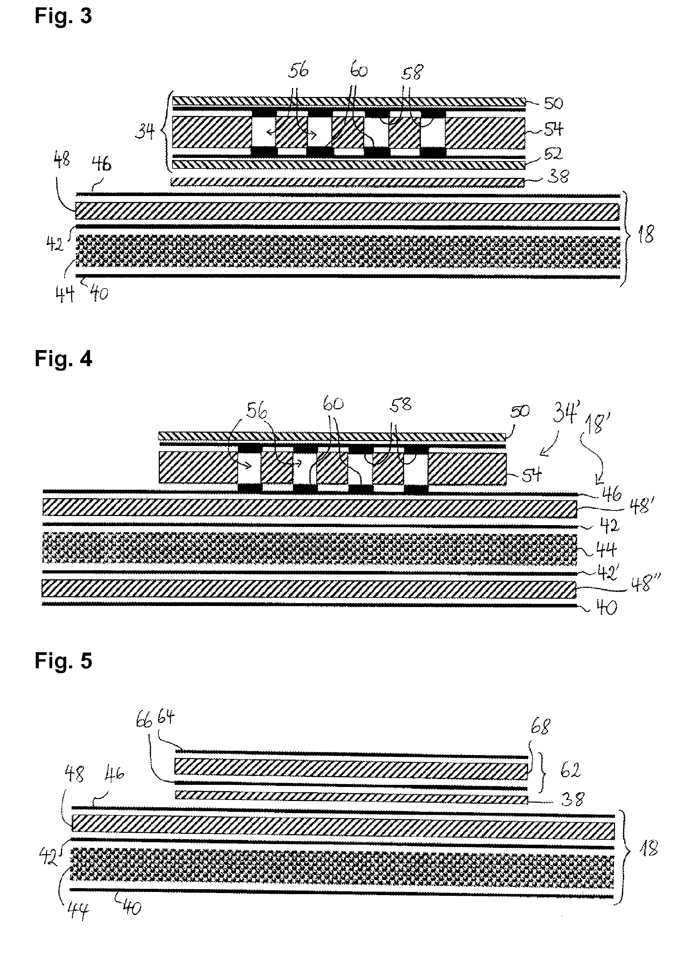

Two embodiments of assemblies of an electret vibration sensor and a pressure sensor are shown in Figs. 3 and 4. In the assembly of Fig. 3 the pressure sensor 34 is attached to the electret vibration sensor by means of double-sided adhesive 38. The electret sensor 18 comprises a first, grounded conductive layer 40 and a second conductive layer 42, which sandwich a compressible electret film 44. The electret film is made of dielectric polymer material containing gas blisters therein. Compression of the electret film 44 causes permanent or quasi-permanent electric charges in the film to be shifted with respect to one another, which in turn gives rise to an electrical signal in the second conductive layer 42. The electret sensor 18 further comprises a third conductive layer 46, arranged on top of the second conductive layer 42 by means of an insulating layer 48.

The pressure sensor 34 comprises a first carrier film 50, a second carrier film 52 and a spacer 54, by means of which the first and second carrier films are arranged at a distance from one another. The spacer is provided with openings 56 therein, which define active zones of the pressure sensor 34. In each active zone of the pressure sensor 34, there is an electrode arrangement with a first 58 and a second electrode 60 applied on the first and/or the second carrier films 50, 52. As the pressure sensor 34 is subjected to compressive force, the first and second carrier films 50, 52 are brought into contact with one another in the active zones, whereby an electrical contact is established between respective first and second electrodes 58, 60. The pressure sensor 34 may be implemented in the so-called through-mode variant (shown in the drawings), wherein the first electrodes 58 are arranged on the first carrier film 50 and the second electrodes 60 on the second carrier film 52 in facing relationship with the respective first electrodes 58, or in the so-called shunt-mode variant (not shown in the drawings), wherein the first and second electrodes 58, 60 are arranged on the same one of the carrier films 50, 52 and wherein contact elements or shunt elements are arranged on the other one of the carrier films, in facing relationship with both the respective first and second electrodes. In both variants, one or more of the first and second electrodes and the shunt element may comprise a pressure-sensitive layer whose resistance depends on the pressure exerted thereon.

In the assembly illustrated in Fig. 4, the pressure sensor 34' and the electret vibration sensor 18' share functional layers. The electret sensor 18' comprises a compressible electret film 44, sandwiched by conductive layers 42 and 42'. Compression of the electret film 44 causes electrical signals in the conductive layers 42 and 42'. The conductive signal layers 42, 42' are shielded from the top and the bottom by grounded conductive layers 40 and 46, respectively. The conductive signal layers and the conductive ground layers are separated from one another by insulating layers 48' and 48". The structure of the pressure sensor 34' is similar to the one of pressure sensor 34 in Fig. 3. However, the insulating layer 48' plays the role of one of the carrier films of the pressure sensor 34'.

Fig. 5 shows an assembly of an electret vibration sensor 18 as shown already in Fig. 3 with a capacitive sensor 62. The capacitive sensor comprises conductive layers 64, 66 separated by a flexible, yet substantially incompressible (when compared with the electret), insulating film. The conductive layers 64, 66 can, for instance, be applied (e.g. printed) on both sides of the insulating film 68. The capacitive sensor is attached to the electret vibration sensor by means of the insulating adhesive film 38. When the capacitive sensor is operating, the control unit applies an oscillating voltage to the lower conductive layer 66 while it keeps the upper conductive layer 64, which is closer to the seating surface of the vehicle seat than the lower conductive layer 66 at substantially the same potential as the lower conductive layer 66. The region between the upper and the lower conductive layer is thus substantially electric-field-free, which causes the sensitivity of the upper conductive layer 64 to capacitive changes to be directed towards the seating surface of the vehicle seat. Depending on the occupancy state of the vehicle seat, the upper conductive layer 64 couples more or less strongly to vehicle ground, and the current flowing into the upper conductive layer thus changes accordingly. The control unit measures certain properties of this current from which it then derives a first indication on the occupant class. The control unit refines the classification based upon the reading from the associated vibration sensor.

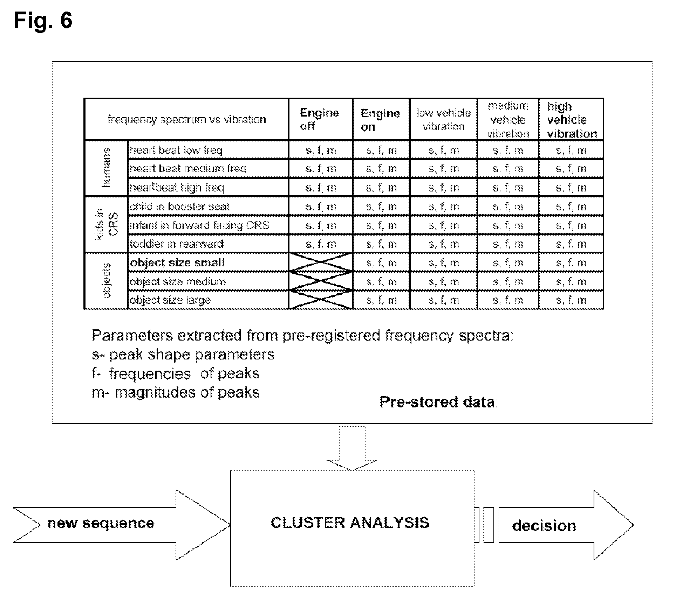

A method based on cluster analysis for detecting seat occupation by means of vibration sensors is schematically illustrated in Fig. 6. The method requires a training process, which is carried out before the method itself may be carried out. During the training process, data related to various seat occupancy situations are recorded (in the example, this comprises occupancy by adults, children in child restraints and objects) for various vehicle noise scenarii (engine off, engine on, low vibrations (as encountered e.g. on a motorway), medium vibrations (as encountered e.g. in urban streets or on country roads) and high vibr. (as encountered e.g. on a deteriorated road or in off-road conditions). When the method is carried out, every "new reading" collected in the vehicle by the sensors is mixed with pre-stored data and a cluster analysis algorithm is run to compute the level of similarity (or dissimilarity) of the new reading with the stored data. Thus, a classification of the new reading and a confidence level may be determined.

## Claims

1. An automotive vehicle having vehicle seats arranged therein, said vehicle seats including a driver seat and one or more passenger seats; said vehicle including an occupant detection system for detecting an occupancy state of said one or more passenger seats,
wherein said occupant detection system comprises a control unit and one or more vibration sensors operatively connected to said control unit, each one of said one or more vibration sensors being arranged in a respective one of said one or more passenger seats;
**characterized in that** said occupant detection system comprises at least one vibration sensor arranged in said driver seat and operatively connected to said control unit for providing a reference signal to said control unit.

2. The automotive vehicle as claimed in claim 1, wherein each one of said vibration sensors is sufficiently sensitive for sensing heart beat and/or breathing rate of an occupant when said occupant is seated on the respective seat and wherein said reference signal contains a heartbeat and/or breathing rate signal component if said driver seat is occupied by a driver, and a noise signal component.

3. The automotive vehicle as claimed in claim 1 or 2, wherein said vibration sensors in said vehicle seats comprise polymer ferroelectrets or polymer-based electromechanical films.

4. The automotive vehicle as claimed in any one of claims 1 to 3, wherein said occupant detection system comprises one or more capacitive sensors connected to said control unit, each one of said one or more capacitive sensors being arranged in a respective one of said one or more passenger seats.

5. The automotive vehicle as claimed in any one of claims 1 to 3, wherein said occupant detection system comprises one or more pressure sensors connected to said control unit, each one of said one or more pressure sensors being arranged in a respective one of said one or more passenger seats.

6. The automotive vehicle as claimed in claim 5, in each passenger seat of which the respective pressure sensor and the respective vibration sensor form a constructional entity.

7. The automotive vehicle as claimed in any one of claims 1 to 6, wherein said vibration sensors are arranged in the seating portions of the vehicle seats.

8. The automotive vehicle as claimed in any one of claims 1 to 7, wherein said occupant detection system is operatively connected with or part of a safety system configured and arranged for monitoring the vehicle interior when said automotive vehicle is at rest.

9. The automotive vehicle as claimed in any one of claims 1 to 8, wherein said one or more passenger seats are equipped with automatically deployable and retractable headrests, retraction and deployment of said headrests being controlled by said control unit depending on the occupancy states of said one or more passenger seats.
